# EUROPÄISCHE PATENTSCHRIFT

(11) **EP 3 233 323 B1**
(45) Veröffentlichungstag und Bekanntmachung des Hinweises auf die Patenterteilung: **11.12.2019**
(21) Anmeldenummer: 15828477.8
(22) Anmeldetag: 14.12.2015
(51) Int. Cl.: B21D 5/00, B21D 5/02, B21D 5/04

(54) **BIEGEWERKZEUG MIT EINER LÄNGSVERSATZ-MESSVORRICHTUNG**
BENDING TOOL HAVING A LONGITUDINAL-OFFSET MEASURING DEVICE
OUTIL DE CINTRAGE AYANT UN DISPOSITIF DE MESURE DE DÉCALAGE LONGITUDINAL

(30) Priorität: 17.12.2014 AT 509182014
(43) Veröffentlichungstag der Anmeldung: 25.10.2017
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); GAGGL, Josef, 4400 Steyr (AT); HAUSMANN, Florian, 4050 Traun (AT); HÖRL, Matthias, 4020 Linz (AT); KOVJENIC, Nenad, 4040 Linz (AT); THEIS, Helmut, 4540 Pfarrkirchen (AT); WALDHERR, Manfred, 4040 Linz (AT)
(74) Vertreter: Burger, Hannes
(86) Internationale Anmeldenummer: PCT/AT2015/050316
(87) Internationale Veröffentlichungsnummer: WO 2016/094918

(56) Entgegenhaltungen:
- EP-A2- 0 166 351
- WO-A1-2011/038716
- WO-A1-2012/155168
- DE-A1-102008 038 932
- DE-B4- 4 042 732

## Beschreibung

Die Erfindung betrifft ein Biegewerkzeug mit einer Längsversatz-Messvorrichtung zur Verwendung in einer Biegemaschine, insbesondere einer Gesenk- bzw. Schwenkbiegemaschine. Die WO 2012/155168 A1 offenbart ein Biegewerkzeug gemäß dem Oberbegriff des Anspruch 1.

Beim Biegen von Blechteilen besteht eine große Herausforderung darin, die geforderte Biegegeometrie einzuhalten, da im Unterschied zum Prägebiegen, das zu biegende Blechteil nicht gegen eine Anlegefläche des Werkzeugs gedrückt wird. Die erreichte Biegegeometrie hängt hier von der, nach einer Modellrechnung ermittelten Kraft und/oder Eintauchtiefe ab, mit der das Blechteil in das Unterwerkzeug der Biegewerkzeuganordnung gedrückt wird, bzw. wie weit die Biegewange beim Schwenkbiegen bewegt wird. Der Biegedruck mit dem die Biegepresse das Oberwerkzeug gegen den zu biegende Blechteil und folglich in das Unterwerkzeug drückt, hängt im Wesentlichen von den Materialeigenschaften des umzuformenden Blechteils ab. Aufgrund von Schwankungen der Materialparameter des umzuformenden Blechteils, insbesondere der Blechdicke und/oder der Materialfestigkeit, wird der nach dem Modell ermittelte Pressendruck bzw. die Eintauchtiefe, oder die ermittelte Trajektorie der Biegewange gegebenenfalls für die aktuell durchzuführende Biegeumformung nicht korrekt sein und sich somit eine abweichende Biegegeometrie ergeben, insbesondere ein abweichender Biegewinkel und/oder eine falsche Schenkellänge. Beim Schwenkbiegen ergibt sich eine Abweichung vom gewünschten Biegewinkel in erster Linie aufgrund der Rückfederung nach dem Biegevorgang. Gerade bei hochpräzisen Blechteilen mit einer Vielzahl einzelner Biegevorgänge können sich Fehler der Biegegeometrie schnell so weit summieren, dass das Blechteil nicht mehr verwendbar ist.

Es ist daher von Vorteil, wenn die aktuell erreichte Biegegeometrie bereits während der Durchführung der Biegeumformung ermittelt werden kann und somit direkt für die Steuerung bzw. Beeinflussung des Biegevorganges herangezogen werden kann.

Beim Schwenkbiegen wird hierin unter Verschwenken bzw. Bewegen verstanden, dass, in Richtung der Biegelinie gesehen, die Bewegungsbahn der Biegewange einen allgemeinen Verlauf aufweisen kann. In einem speziellen Fall kann dies eine Kreisbahn sein, mit dem Klemmpunkt des Bleches durch die Niederhalterwerkzeuge als Mittelpunkt. Insbesondere kann die Bewegungsbahn auch einen komplexen Verlauf aufweisen. Somit lässt sich erreichen, dass es zu einer möglichst geringen Gleitbewegung des Bleches gegenüber der Biegewange kommt und damit eine hohe Oberflächengüte erreicht werden kann.

Beim Freibiegen von Blechteilen wird das zu biegende Blech in eine Biegegesenkanordnung eingelegt, welche Biegewerkzeuganordnung zumindest aus einem Unterwerkzeug und einem Oberwerkzeug gebildet ist. Die Biegewerkzeuganordnung wird in einer Biegemaschine eingesetzt, wobei mittels einer Maschinensteuerung Antriebsmittel derart angesteuert werden, dass die Biegeumformung durchgeführt wird. Bevorzugt wird das auch als Biegestempel bezeichnete Oberwerkzeug von Antriebsmitteln der Biegemaschine in Richtung des als Biegegesenk bekannten Unterwerkzeugs bewegt, wodurch das umzuformende Blech in die Biegeausnehmung gedrückt wird.

Beim Schwenkbiegen wird das Blech zwischen dem oberen und unteren Niederhalterwerkzeug geklemmt, die obere oder die untere Biegewange vor dem Blech positioniert und durch verschwenken der Biegewange, die Biegeumformung durchgeführt. Hierbei kann durch den Verschwenkwinkel der geforderte Biegewinkel vorgegeben werden, wobei sich jedoch aufgrund der Bewegungstrajektorie ein nicht genau bekannter Biegeradius ergeben wird, und sich somit auch der Winkel nicht exakt vorgegeben lässt! Zusätzlich wird es auch hier zu einer Rückfederung kommen, die wesentlich von der Variation der Materialeigenschaften beeinflusst wird.

Aufgrund von Materialtoleranzen des zu biegenden Bleches kann es vorkommen, dass mit den ermittelten Biegeparametern, insbesondere für die ermittelte Presskraft und/oder Eintauchtiefe bzw. den Verschwenkwinkel, die geforderte Biegegeometrie nicht eingehalten wird. Beispielsweise kann sich ein falscher Biegewinkel einstellen und/oder aufgrund einer Abweichung von der erwarteten bzw. berechneten Biegeverkürzung, kann sich eine unerwünschte Schenkellänge einstellen. Um aufwändiges und zeitintensives Nachmessen der aktuell erreichten Biegegeometrie zu verhindern, sind aus dem Stand der Technik Vorrichtungen bekannt, bei denen bspw. der aktuelle Biegewinkel während des Biegevorgangs ermittelt wird. Neben kontaktbehafteten Messvorrichtungen sind insbesondere kontaktlos arbeitende Systeme bekannt. Beispielsweise offenbart die WO 2012/155168 A1 ein optisch arbeitendes System, bei dem der Biegewinkel an jeder beliebigen Stelle längs der Biegelinie gemessen werden kann. Das offenbarte System weist eine Lichtquelle auf, welche längs des Pressenbalkens verschiebbar angeordnet ist. Ferner ist stirnseitig am Biegegesenk eine Bilderfassungsvorrichtung angeordnet. Über eine spezielle Optik und ein Bildanalyse- und Auswerteverfahren wird aus den ermittelten Abbildern des am Blech beleuchteten Abschnitts, der dort herrschende Biegewinkel ermittelt. Bei dem offenbarten System ist jedoch eine Umrüstung der Biegepresse erforderlich, insbesondere ist die Beleuchtungsvorrichtung und die Bilderfassungsvorrichtung an der Biegepresse anzubringen.

Die Aufgabe der Erfindung liegt nun darin, einen Biegevorgang dahingehend zu verbessern, dass bereits während der Durchführung der Biegeumformung, die sich einstellende Biegegeometrie ermittelt werden kann. Dies soll insbesondere ohne aufwändige Umrüstarbeiten, universell für eine Vielzahl von Biegemaschinen verwendbar sein. Die Ausführung soll ferner sehr kompakt ausgebildet sein, um somit möglichst geschützt gegen die beim bestimmungsgemäßen Biegevorgang auftretenden Belastungen zu sein.

Die Aufgabe der Erfindung wird gelöst durch ein Biegewerkzeug mit einer Längsversatz-Messvorrichtung, welches Biegewerkzeug Teil einer Biegewerkzeuganordnung zur Verwendung in einer Biegemaschine ist. In der Biegewerkzeuganordnung ist ein zu biegendes Blech angeordnet, ferner weist das Biegewerkzeug einen Werkzeugkörper mit einer Längserstreckung auf, welche Längserstreckung parallel zu einer Biegelinie ausgerichtet ist. Parallel zu dieser Längserstreckung und in Richtung des zu biegenden Bleches ausgerichtet, sind zwei Anlegeflächen oder zumindest eine Anlegekante ausgebildet. Im Bereich der Anlegekante oder in einer Anlegefläche ist ein Sensor zur Ermittlung eines Längsversatzes angeordnet, wobei ein Erfassungsabschnitt des Sensors in Richtung eines zu biegenden Bleches ausgerichtet ist.

Nicht weiter beschrieben werden die weiteren, zur Durchführung einer Biegeumformung erforderlichen Komponenten einer Biegemaschine. Insbesondere wird als bekannt vorausgesetzt, dass durch Relativbewegung der Komponenten der Biegewerkzeuganordnung ein Blech umgeformt und somit die gewünschte Biegegeometrie ausgebildet wird. Dabei bleibt zumeist eine Werkzeugkomponenten relativ zur Biegemaschine in Ruhe, und die andere führt, kraftbeaufschlagt durch ein Antriebsmittel der Biegemaschine, die Biegeumformung durch.

Gleichwohl ist auch eine Ausführung mitumfasst, bei der sich mehrere Komponenten der Biegewerkzeuganordnung relativ zueinander bewegen.

Unter der Anlegekante bzw. der Anlegelinie wird jener Abschnitt des Biegewerkzeugs verstanden, der während des Biegevorgangs Kontakt mit dem Blech hat und somit den überwiegenden Teil der von einem Antriebsmittel der Biegemaschine auf das Biegewerkzeug aufgebrachten Pressenkraft, auf das Blech einwirken lässt und dadurch die Biegeumformung durchführt. Diese Anlegekante bzw. Anlegelinie kann eine konstruktiv vorhandene Kante am Biegewerkzeug sein, es ist jedoch auch möglich, dass diese Kante bzw. Linie durch eine gedachte Kante bzw. Linie gebildet wird, die während der Biegeumformung Kontakt mit dem Blech hat und der konstruktiven Kante bzw. Linie entspricht.

Nach einer Weiterbildung ist vorgesehen, dass der Sensor versatzfrei in Relation zur Anlegekante bzw. Anlegelinie angeordnet ist. Dies bedeutet, dass die Position des Sensors in Relation zur Anlegekante bzw. Anlegelinie durch das in die Biegeausnehmung gedrückte Blech, beziehungsweise durch das am Biegewerkzeug abgleitende Blech, nicht verändert wird.

Eine Weiterbildung besteht auch darin, dass der Sensor um die Anlegelinie verschwenkbar ausgebildet ist. Dies kann bspw. dadurch realisiert werden, dass der Grundkörpers einen Abschnitt aufweist, in welchem die Anlegelinie unterbrochen ist und in welchem Abschnitt der Sensor angeordnet ist. Dadurch wird gewährleistet, dass sich der Sensor, insbesondere der Erfassungsabschnitt des Sensors, während der gesamten Biegeumformung zum Blech ausrichten kann.

Eine weitere Ausführung besteht darin, dass das Biegewerkzeug als Unterwerkzeug einer Biegepresse ausgebildet ist und dass die Anlegeflächen durch Schwenkbacken gebildet sind, welche Schwenkbacken um eine, zur Anlegelinie parallele Drehachse verschwenkbar sind. Beim Biegen empfindlicher Blechoberflächen, insbesondere wenn es durch den Biegevorgang zu keiner Beeinträchtigung der Oberflächengüte kommen darf, werden derartige Schwenkbacken eingesetzt. Diese liegen während des Biegevorgangs am Blech an, so dass es zu einer Verteilung der Presskraft auf eine größere Fläche kommt. Die Anlegekante bzw. Anlegelinie ist bei dieser Ausführung als jene gedachte Kante bzw. Linie zu verstehen, an der der Kraftvektor der Presskraft vom Blech in den Werkzeugkörper des Unterwerkzeugs gelenkt wird.

Eine Weiterbildung, bei der das Biegewerkzeug als Unterwerkzeug einer Biegepresse ausgebildet ist, besteht auch darin, dass die Anlegeflächen eine Biegeausnehmung eines V-förmigen Biegegesenks bilden, welche Biegeausnehmung sich von einer oberen Flachseite des Werkzeugkörpers und in Richtung weg vom umzuformenden Blech, in den Werkzeugkörper erstreckt. Beim Freibiegen hängt die erreichbare Genauigkeit der auszubildenden Biegegeometrie stark vom Einzug des Bleches in das Unterwerkzeug ab. Wird dieser Einzug während der Biegeumformung ermittelt, kann unmittelbar korrigierend eingegriffen werden, bspw. indem die Eintauchtiefe des Biegestempels in das Biegegesenk angepasst wird.

Nach einer Weiterbildung ist vorgesehen, dass der Sensor durch eine Beleuchtungs- und eine Bilderfassungsvorrichtung gebildet ist. Bevorzugt ist die Beleuchtungsvorrichtung als LED oder Laser ausgebildet, die Bilderfassungsvorrichtung ist als 2D-Bildsensor ausgebildet. Derartige Systeme sind bspw. aus der Computertechnik bekannt und werden dort in optischen Mäusen eingesetzt. Der Vorteil liegt insbesondere darin, dass aufgrund der weiten Verbreitung, sehr kompakte und kostengünstige Sensormodule verfügbar sind. Diese Module beleuchten einen Oberflächenabschnitt und erfassen in rascher Abfolge Abbilder des beleuchteten Abschnitts, welche Abbilder einer weiteren Verarbeitung bzw. Aufbereitung zugeführt werden.

Eine Weiterbildung besteht auch darin, dass der Sensor durch einen Sender und Empfänger für elektromagnetische Strahlung gebildet ist. Da die zu biegenden Bleche zumeist aus Metall bestehen, ist auch eine auf einer Wirbelstrommessung basierende Erfassung eines Längsversatzes möglich. Dabei wird vom Sender ein magnetisches Wirbelfeld im Blech erzeugt, welches bei einer Bewegung des Blechs aufgrund der Biegung, in einem Empfänger eine Spannung induziert. Durch Wahl der Anregungsfrequenz und durch konstruktive Gestaltung bzw. Versatz von Sender- und Empfangsspulen, lässt sich aus der induzierten Spannung auf den, diese Spannung verursachenden Längsversatz, zurückschließen.

Eine Weiterbildung besteht auch darin, dass der Sensor in einer Ausnehmung zumindest einer der Anlegeflächen angeordnet ist. Zur Erfassung des Längsversatzes ist es von Bedeutung, dass der Sensor möglichst nahe an der Blechoberfläche angeordnet ist. Nach einer Weiterbildung ist vorgesehen, dass eine Erfassungsflachseite des Sensors von der Anlegefläche um einen Versatz von der Anlegefläche distanziert, im Werkzeugkörper angeordnet ist. Dies gewährleistet, dass der Sensor durch das längs des Sensors abgleitende Blech nicht beschädigt wird. Aufgrund der Krafteinwirkung durch das Oberwerkzeug beim Biegevorgang, wird das Blech gegen die Anlegekante bzw. Anlegeflächen gedrückt und bewegt sich bei weiter fortschreitender Biegung in die Biegeausnehmung. Bevorzugt ist die Erfassungsfläche des Sensors in der Erfassungsflachseite angeordnet. Durch den anspruchsgemäßen Versatz wird nun sichergestellt, dass das Blech bei der Längsbewegung relativ zum Sensor, nicht an diesem anliegt und ggf. die Erfassungsfläche beschädigt. Diese Weiterbildung ist insbesondere für kontaktlos arbeitende Sensoren vorteilhaft.

Neben einer Verwendung des gegenständlichen Biegewerkzeugs in einer Biegepresse, zum Frei- oder Prägebiegen, kann das Biegewerkzeug auch bei einer Schwenkbiegemaschine verwendet werden. Daher ist gemäß einer Weiterbildung das Biegewerkzeug als Biegewange einer Schwenkbiegemaschine ausgebildet. Beim Schwenkbiegen wird der umzuformende Blechteil nicht von einem Oberwerkzeug in ein Unterwerkzeug gedrückt, sondern das vom Niederhalterwerkzeug geklemmte Blech wird von der Biegewange um den gewünschten Winkel gebogen. Da die grundlegenden Merkmale beim Schwenk- als auch Frei- bzw. Prägebiegen vergleichbar sind, lassen sich die zuvor genannten Ausführungen somit auch auf eine Schwenkbiegemaschine umlegen.

Eine Weiterbildung besteht darin, dass der Sensor in einem Abschnitt eines vorderen Endes der Biegewange angeordnet ist, welches vordere Ende das Blech während der Durchführung der Biegeumformung kontaktiert. Diese Weiterbildung gewährleistet, dass der Sensor während der Durchführung der Biegeumformung, stets Kontakt mit dem Blech hat und somit eine durchgehende Erfassung der Relativverschiebung gegeben ist.

Nach einer Weiterbildung ist auch vorgesehen, dass im Bereich des vorderen Endes ein Kontaktelement angeordnet ist, welches Kontaktelement gegenüber der Biegewange um die Anlegekante verschwenkbar oder um eine zur Anlegekante parallele Achse drehbar gehalten ist, wobei dieses Kontaktelement keine Presskraft auf das Blech überträgt. Durch die spezifische Bewegung der Biegewange beim Schwenkbiegen kann es vorkommen, dass sich die Kontaktlinie, mit der die Biegewange das Blech kontaktiert, in der Position in Relation zum vorderen Ende der Biegewange geringfügig ändert. Somit kann sich die Ausrichtung des Sensors zum Blech ändern, was evtl. zu einem Erfassungsfehler führen könnte. Mit dieser Weiterbildung ist gewährleistet, dass der Sensor stets korrekt zum Blech ausgerichtet bleibt.

Dahingehend besteht einer Weiterbildung auch darin, dass das Kontaktelement eine Flachseite aufweist, in welcher der Sensor angeordnet ist und welche Flachseite beim Biegevorgang am Blech anliegt.

Eine Weiterbildung besteht auch darin, dass das Kontaktelement als Tastscheibe ausgebildet ist, welche Tastscheibe bei der Biegeumformung am Blech abrollt. Somit wird vom Sensor eine Relativbewegung zwischen Tastscheibe und dem vorderen Ende der Biegewange erfasst.

Nach einer Weiterbildung ist vorgesehen, dass der Sensor als Einlegeteil ausgebildet ist. Damit kann bspw. ein Unterwerkzeug geschaffen werden, das bei Bedarf mit einem Sensor ausgestattet werden kann. Beziehungsweise können unterschiedlich ausgebildete Sensoren mit einem Unterwerkzeug verwendet werden. Oder ein Sensor kann in unterschiedlichen Unterwerkzeugen verwendet werden. Gleichbedeutend kann damit auch eine Biegewange mit einem derart ausgebildeten Sensor geschaffen werden.

Nach einer Weiterbildung ist ferner vorgesehen, dass der Sensor mit einer Auswerteschaltung verbunden ist, welche ferner mit einer Maschinensteuerung verbunden oder in diese integriert ist. Mit dieser Weiterbildung wird erreicht, dass der vom Sensor ermittelte Längsversatz während des Biegevorgangs in den Biegevorgang einfließt, insbesondere dass die Maschinensteuerung den Biegevorgang bei Erreichen der gewünschten Biegegeometrie stoppt.

Ferner ist vorgesehen, dass die Auswerteschaltung ein Bildanalyse- und ein Vergleichsmodul aufweist. Vom Sensor wird periodisch, insbesondere in schneller Folge, ein Abbild des beleuchteten Abschnitts der Blechoberfläche ermittelt. Jede Blechoberfläche weist herstellungsbedingt charakteristische Merkmale auf. Durch den zu erfassenden Längsversatz wird sich die Position dieser Merkmale zwischen den einzelnen erfassten Abbildern unterscheiden. Unter Berücksichtigung der Bildererfassungsfrequenz lässt sich durch Kumulation der einzelnen Versatzwerte, der gewünschte Längsversatz ermitteln.

Eine Weiterbildung besteht auch darin, dass das Bildanalyse- und Vergleichsmodul zur Ermittlung eines eindimensionalen oder zweidimensionalen Bewegungsvektors für den Längsversatz ausgebildet ist. Im Idealfall kommt es beim Biegevorgang nur zu einem eindimensionalen Längsversatz. Das niederfahrende Oberwerkzeug wird das Blech in die Biegeausnehmung drücken, wobei sich eine Längsbewegung einstellen wird, die rechtwinkelig zur Anlegelinie ausgerichtet ist. Durch ungleichmäßige Materialparameter des zu biegenden Bleches, oder ein ungleichmäßig niederfahrendes Oberwerkzeug kann es vorkommen, dass das Oberwerkzeug eine Kraftkomponente in Richtung parallel zur Anlegekante auf das Blech einbringt. Dies wird jedoch zu einem unerwünschten Biegeergebnis führen. Daher ist es von Vorteil, wenn ein zweidimensionaler Bewegungsvektor für den Längsversatz ermittelt wird, da damit ein Verzug und somit Spannungen im Blech erkannt werden können.

Ähnlich kann es auch beim Schwenkbiegen aufgrund solcher schwankender Materialparameter vorkommen, dass der Biegeradius längs der Biegelinie nicht gleichförmig ist, und sich so ebenfalls eine abweichende Biegegeometrie ergibt.

Neben kontaktlosen Messprinzipien ist es nach einer Weiterbildung jedoch auch möglich, dass der Sensor durch eine Abrollvorrichtung gebildet ist. Die Abrollvorrichtung, bspw. ein Rad mit einer Oberflächenstruktur, liegt auf der Blechoberfläche auf und ermittelt bspw. über einen Drehgeber, direkt den Längsversatz.

Die Aufgabe der Erfindung wird auch durch ein Verfahren zur Bestimmung der Biegegeometrie beim Freibiegen gelöst. Dieses Verfahren wird auf einer Biegepresse mit einer Biegewerkzeuganordnung ausgeführt, welche Biegewerkzeuganordnung ein Unter- und ein Oberwerkzeug umfasst, wobei das Unterwerkzeug nach den gegenständlichen Ausführungen ausgebildet ist. Dabei wird ein zu biegendes Blechteil in die Biegewerkzeuganordnung eingelegt und die Freibiege-Umformung dadurch ausgeführt, dass durch ein Niederfahren des Oberwerkzeugs, das Blechteil vom Oberwerkzeug in eine Biegeausnehmung des Unterwerkzeugs gedrückt wird. Dabei wird vor Beginn der Biegeumformung, eine Oberfläche des zu biegenden Blechteils mit einem Sensor zur Ermittlung eines Längsversatzes in Kontakt gebracht und für diesen Kontaktpunkt, Referenz-Koordinaten der Blechoberfläche in Bezug zur Biegemaschine oder zur Biegewerkzeuganordnung ermittelt. Während der Biegeumformung wird ein Längsversatz der Blechoberfläche in Bezug zum Sensor ermittelt und ferner von einer Auswerteschaltung aus dem ermittelten Längsversatz, gemäß einem mathematischen Modell der Biegeumformung, die aktuelle Biegegeometrie ermittelt.

Nachdem vor dem Beginn der Biegeumformung die Position des Sensors, bzw. des Kontaktpunkts des Sensors mit der Blechoberfläche, in Bezug zur Biegemaschine oder zur Biegewerkzeuganordnung ermittelt wird, kann während der Biegeumformung, jede Relativbewegung des Bleches in Bezug zum Sensor ermittelt und in einen Bezug zur Biegemaschine bzw. zur Biegewerkzeuganordnung transformiert werden.

Mit den Referenz-Koordinaten wird die Position eines Punkts des Bleches (der Blechoberfläche) in Bezug zur Biegemaschine und/oder zur Biegewerkzeuganordnung festgelegt. Durch den Einzug des Bleches in die Biegeausnehmung des Unterwerkzeugs wird sich das Blech um den zu ermittelnden Längsversatz relativ zu diesem ermittelten Referenzpunkt bewegen.

Die Aufgabe der Erfindung wird ferner auch durch ein Verfahren zur Bestimmung der Biegegeometrie beim Schwenkbiegen ausgeführt auf einer Schwenkbiegemaschine mit einer Biegewerkzeuganordnung gelöst. Die Biegewerkzeuganordnung umfasst ein Niederhalterwerkzeug und zumindest eine Biegewange, wobei ein zu biegender Blechteil in der Biegewerkzeuganordnung eingelegt wird und die Freibiege-Umformung dadurch ausgeführt wird, dass das Blechteil vom Niederhalterwerkzeug geklemmt wird und die Biegewange am Blechteil angelegt und um eine Trajektorie bewegt bzw. verfahren wird. Die Biegewange ist dabei gemäß der gegenständlichen Ausführung ausgebildet. Insbesondere wird vor Beginn der Biegeumformung, eine Oberfläche des zu biegenden Blechteils mit einem Sensor zur Ermittlung eines Längsversatzes in Kontakt gebracht. Für diesen Kontaktpunkt werden Referenz-Koordinaten der Blechoberfläche in Bezug zur Schwenkbiegemaschine oder zur Biegewerkzeuganordnung ermittelt. Während der Biegeumformung wird ein Längsversatz der Blechoberfläche in Bezug zum Sensor ermittelt und von einer Auswerteschaltung wird aus dem ermittelten Längsversatz, gemäß einem mathematischen Modell der Biegeumformung, die aktuelle Biegegeometrie ermittelt.

Nach einer Weiterbildung ist vorgesehen, dass während der Ermittlung des Längsversatzes, der Sensor ortsfest bezüglich der Referenz-Koordinaten gehalten wird. Bei der Kontaktierung der Blechoberfläche durch den Sensor wird durch die Referenz-Koordinaten eine Referenz in Bezug zur Blechoberfläche festgelegt, auf Basis derer bzw. in Bezug zu welcher, der Längsversatz ermittelt wird. Mit dieser Weiterbildung wird gewährleistet, dass unabhängig von der Bewegung des Blechteils während der Durchführung der Freibiege-Umformung, der Sensor bezüglich dieser Referenz ortsfest bleibt. Der Sensor wird einer allfälligen Aufbiegung des Bleches bzw. des Blechschenkels folgen, die Position in Bezug zur Referenz jedoch beibehalten.

Eine Weiterbildung besteht darin, dass das Unterwerkzeug gemäß einer der gegenständlichen Ausführungen ausgebildet ist und vom Sensor der Längsversatz des Bleches im Bezug zur Anlegekante des Unterwerkzeugs ermittelt wird. Da durch diese Anordnung die Position des Sensors durch geometrische Abmessungen des Unterwerkzeugs festgelegt ist, erfolgt die Ermittlung der Referenz-Koordinaten durch Kenntnis der Werkzeuggeometrie.

Eine Weiterbildung kann auch darin bestehen, dass der Sensor mittels einer Verschwenkvorrichtung im Bereich des Oberwerkzeugs oder an einem Pressentisch der Biegepresse angeordnet ist, wobei während der Biegeumformung die Verschwenkvorrichtung dem sich aufbiegenden Blech folgt. Somit sind für die universelle Anordnung des Sensors weitere Möglichkeiten gegeben. Insbesondere wird es damit möglich, den Sensor bzw. die Verschwenkvorrichtung auch nachträglich an einer vorhandenen Biegepresse anzuordnen, ohne dass dazu Umbau- bzw. Umrüstarbeiten erforderlich sind.

Zum besseren Verständnis der Erfindung wird diese anhand der nachfolgenden Figuren näher erläutert.

Es zeigen jeweils in stark vereinfachter, schematischer Darstellung:
- Fig. 1: eine mögliche Ausführungsvariante des gegenständlichen Biegewerkzeugs;
- Fig. 2: eine weitere mögliche Ausführungsvariante des gegenständlichen Biegewerkzeugs;
- Fig. 3: a) und b) die Verhältnisse während des Biegevorgangs mit einer möglichen Ausführungsvariante des Biegewerkzeugs;
- Fig. 4: eine Detailansicht des Sensors;
- Fig. 5: eine Ausführung des gegenständlichen Biegewerkzeugs für das Schwenkbiegen.

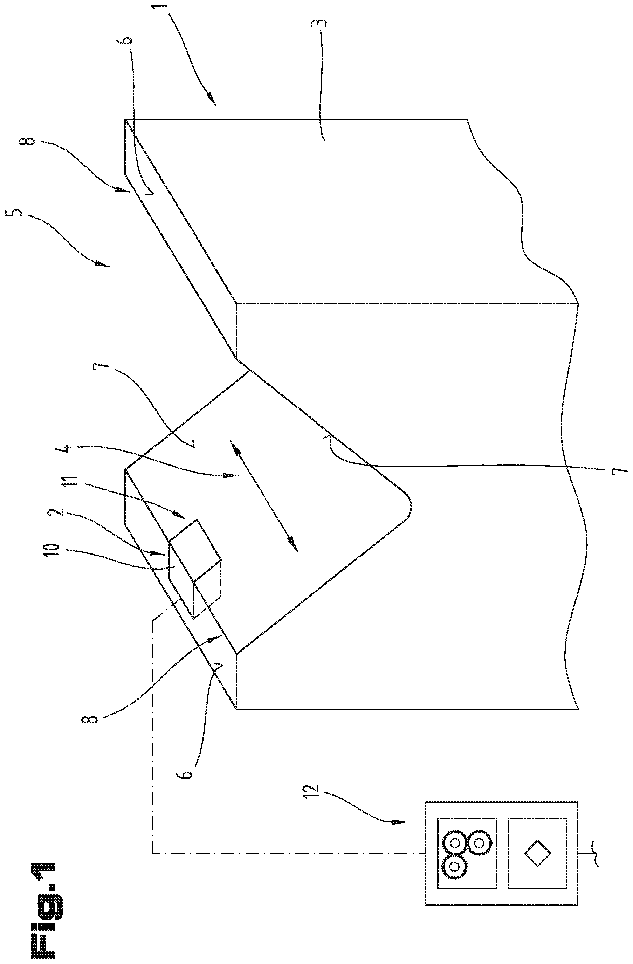

Fig. 1 zeigt eine Ausführung eines gegenständlichen Biegewerkzeuges 1 mit einer Längsversatz-Messvorrichtung 2, wobei das Biegewerkzeug 1 als Unterwerkzeug zum Freibiegen ausgebildet ist. Das Biegewerkzeug 1 weist einen Werkzeugkörper 3 mit einer Längserstreckung 4 auf, in Richtung welcher Längserstreckung 4 eine Biegeausnehmung 5 vorgesehen ist. Die Biegeausnehmung 5 erstreckt sich von einer oberen Flachseite 6 des Werkzeugkörpers 3 in diesen und wird durch zwei Anlegeflächen 7 gebildet. Der Übergangsbereich von der oberen Flachseite 6 in die Biegeausnehmung 5 bildet eine Anlegekante 8 aus. Vorgesehen ist ferner, dass im Bereich der Anlegekante 8 ein Sensor 10 angeordnet ist, welcher Sensor 10 zur Ermittlung eines Längsversatzes des zu biegenden Bleches in Relation zum Sensor ausgebildet ist. Dazu ist ein Erfassungsabschnitt 11 des Sensors 10 in Richtung des zu biegenden Bleches ausgerichtet.

In der Fig. 1 ist der Sensor 10 lediglich im Bereich einer Anlegekante 8 angeordnet, es ist jedoch gleichwohl möglich, dass auch an der zweiten, gegenüberliegenden Anlegekante 8 ein Sensor angeordnet ist.

Der Sensor 10 ist ferner mit einer Auswerteschaltung 12 verbunden, welche Auswerteschaltung 12 mit einer nicht dargestellten Maschinensteuerung verbunden ist bzw. in diese integriert ist. Es kann ferner vorgesehen sein, dass die Auswerteschaltung 12 ein Bildanalyse und Vergleichsmodul aufweist.

In der Beschreibung zu Fig. 1 wird von Anlegeflächen 7 gesprochen, wobei darauf hingewiesen wird, dass der Biegevorgang nicht solange ausgeführt wird, bis das Blech an den Anlegeflächen 7 anliegt - dies wäre ein Prägebiegen. Beim Freibiegen wird das Blech in die Biegeausnehmung 5 gedrückt und zwar lediglich soweit, bis die gewünschte Biegegeometrie erreicht ist.

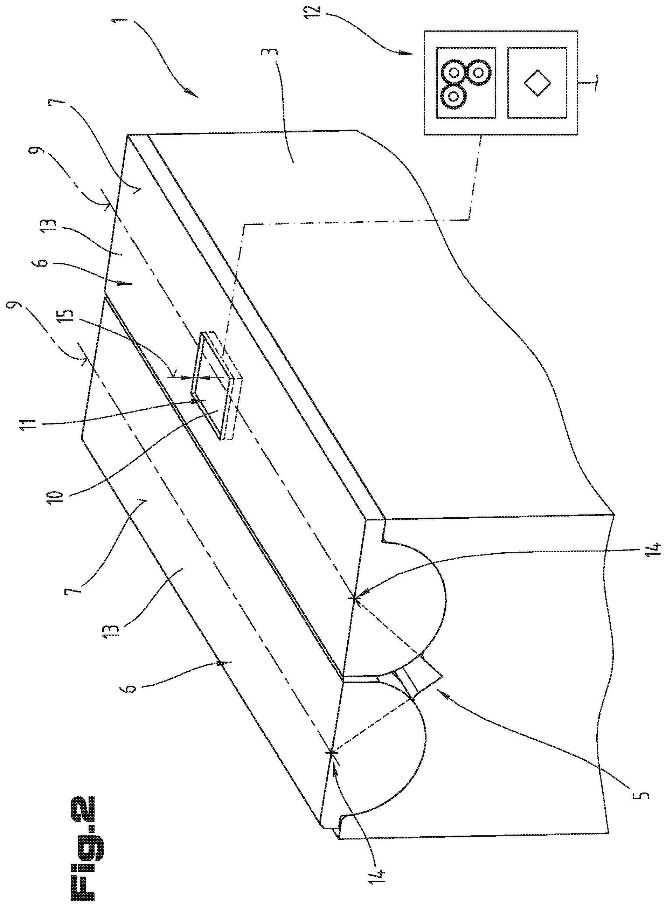

Fig. 2 zeigt eine weitere mögliche Ausführung des gegenständlichen Biegewerkzeuges 1. Bei dieser Ausführung sind die Anlegeflächen 7 durch Schwenkbacken 13 gebildet, welche Schwenkbacken 13 um eine, zur Anlegelinie 9 parallele Achse 14 verschwenkbar sind. Bei dieser Ausführung bildet die Anlegefläche 7 zugleich auch die obere Flachseite 6 des Werkzeugkörpers 3 aus.

Ein Biegewerkzeug 1 mit Schwenkbacken 13 hat den Vorteil, dass das zu biegende Blech auf der oberen Flachseite 6 bzw. den Anlegeflächen 7 aufgelegt und von diesen großflächig gestützt wird. Im Gegensatz zu der in Fig. 1 dargestellten Anordnung kommt es demnach beim Biegevorgang zu keiner linienförmigen Kraftbeaufschlagung entlang der Anlegelinie 9. Sobald das zu biegende Blech vom nicht dargestellten Biegestempel in die Biegeausnehmung 5 gedrückt wird, werden die Schwenkbacken 13 um die Schwenkachse 14 verschwenken, sodass das zu biegende Blech stets durch die gesamte Flachseite der Anlegefläche 7 jeder Schwenkbacke 13 gestützt wird. Bei Abschluss des Biegevorgangs sind die Schwenkbacken 13 vollständig aufgeschwenkt, sodass sich eine Biegeausnehmung 5 mit durchgehenden Anlegeflächen ausbildet - in der Figur strichliert angedeutet.

Im Bereich der Anlegelinie 9 ist ein Sensor 10 zur Ermittlung eines Längsversatzes angeordnet, wobei ein Erfassungsabschnitt 11 des Sensors in Richtung des zu biegenden Bleches ausgerichtet ist.

Zur Vereinfachung der Darstellung ist sowohl in Fig. 1 als auch in Fig. 2 das zu biegende Blech nicht dargestellt. Für den Fachmann ist jedoch klar nachvollziehbar, dass das zu biegende Blech auf der oberen Flachseite 6 des Werkzeugkörpers 3 aufgelegt wird. Bei der Umformung des Blechteils durch den niederfahrenden Pressenstempel wird das Blech in die Biegeausnehmung 5 gedrückt, wodurch sich das Blech relativ zur Anlegelinie 9 bewegen wird. Insbesondere normal zur Anlegelinie 9 in Richtung des unteren Tiefpunkts der Biegeausnehmung 5, wobei dieser Längsversatz erfasst wird. Damit der Sensor 10 durch diesen Längsversatz des mit der Biegekraft gegen die Anlegefläche 7 gedrückten Bleches nicht beschädigt wird, kann vorgesehen sein, dass der Sensor 10 um einen Versatz 15 gegenüber der Anlegefläche 7 versetzt angeordnet ist.

In der Fig. 2 ist wiederum nur ein Sensor 10 in einer Anlegefläche 7 dargestellt, es ist jedoch genauso möglich, dass in beiden Anlegeflächen 7 jeweils ein Sensor 10 angeordnet ist.

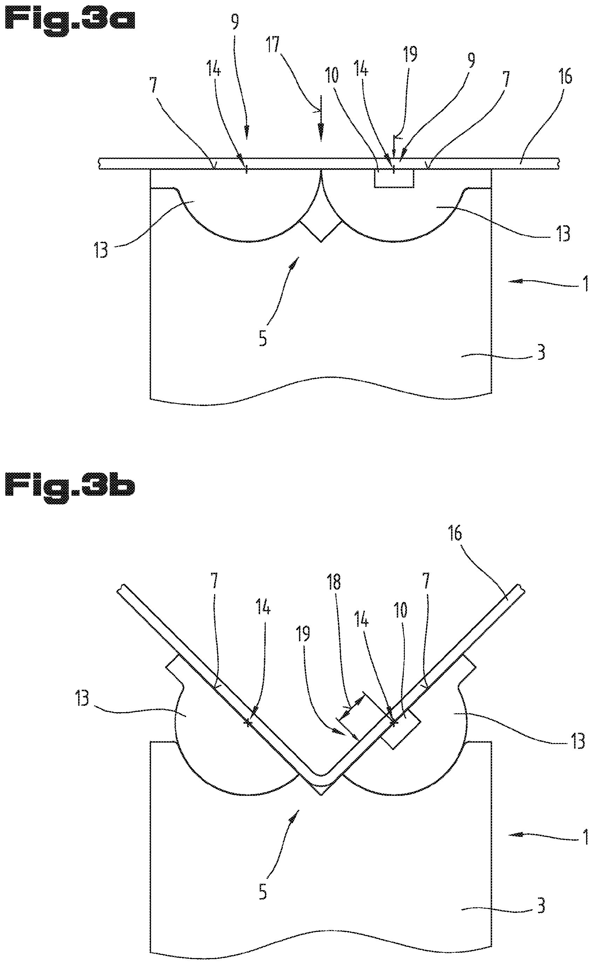

Die Fig. 3a und 3b zeigen die Bestimmung der Biegegeometrie, insbesondere der Schenkellänge, durch Ermittlung des Längsversatzes des zu biegenden Bleches anhand einer Ausführung des Biegewerkzeuges 1 mit Schwenkbacken 13.

Fig. 3a zeigt die Situation im Ausgangszustand, bei dem auf der Anlegefläche 7 der Schwenkbacke 13 ein umzuformendes Blech 16 angeordnet ist. Die Schwenkbacken 13 sind um eine, zur Anlegelinie 9 parallele Schwenkachse 14 verschwenkbar. Der Sensor 10 ist derart im Bereich der Anlegekante bzw. Anlegelinie 9 angeordnet, dass es bei einem Verschwenken der Schwenkbacken 13 zu keinem Versatz des Sensors in Relation zur Anlegelinie 9 kommt und somit ausschließlich eine Relativbewegung des abgleitenden Bleches 16 relativ zum Sensor 10 ermittelt wird.

Vom nicht dargestellten Biegestempel wird während des Biegevorgangs eine Krafteinwirkung 17 auf das Blech 16 ausgeübt, wodurch dieses in die Biegeausnehmung 5 gedrückt wird. Dabei werden die Schwenkbacken 13 um die Achse 14 verschwenken, sodass stets die Anlegeflächen 7 der Schwenkbacken 13 am Blech 16 anliegen.

Da das Blech 16 während des Biegevorgangs in die Biegeausnehmung 5 gedrückt wird, wird es zu einer Relativbewegung zwischen Blech 16 und Anlegefläche 7 kommen. Ein Oberflächenpunkt 19 wird sich daher relativ zum Sensor 10 bewegen. Diese Situation ist in Fig. 3b dargestellt.

Die Fig. 3b zeigt den Zustand bei Erreichung der gewünschten Biegeumformung, insbesondere sind beide Schwenkbacken 13 durch das in die Biegeausnehmung 5 gedrückte Blech 16 vollständig aufgeschwenkt.

In der Figur 3 ist auch erkennbar, dass es durch den Biegevorgang zu einem Längsversatz 18 eines Oberflächenpunkts 19 zwischen der Ausgangslage (Fig. 3a) und der Endlage (Fig. 3b) kommt. Zur Verdeutlichung der Situation wurde die Darstellung des Längsversatzes deutlich übertrieben. Dieser Längsversatz 18 hat insbesondere einen direkten Einfluss auf die erreichte Schenkellänge des gebogenen Blechteils 16. Wie bereits erwähnt, werden beim Freibiegen die Presskraft und/oder die Eintauchtiefe anhand eines mathematischen Modells der Biegeumformung ermittelt. Insbesondere haben die Soll-Blechdicke und Soll-Festigkeit des Bleches, einen wesentlichen Einfluss auf die ermittelten Parameter. Bei Abweichungen von diesen Soll-Werten kann es somit vorkommen, dass ein abweichender Biegewinkel erreicht wird und/oder dass sich eine abweichende Schenkellänge einstellt, insgesamt also eine abweichende Biegegeometrie erreicht wird. Bei komplexen zu biegenden Blechteilen, ist jedoch die zu erreichende Schenkellänge von besonderer Bedeutung, da sich hier Abweichungen sehr schnell über vorgegebene Toleranzen summieren können.

Durch die Ermittlung des aktuellen Längsversatzes 18 und Vergleich mit einem, aus dem Biegemodell ermittelten Soll-Längsversatz, kann unmittelbar auf die aktuelle, tatsächliche Schenkellänge geschlossen werden.

Neben der aktuell erreichten Schenkellänge, kann über den ermittelten Längsversatz 18 auch auf den erreichten Biegewinkel geschlossen werden. Durch Kenntnis der Eintauchtiefe, dieser Wert wird von der Maschinensteuerung der Biegepresse ermittelt, und des Längsversatzes 18, kann über das mathematisches Modell der Biegeumformung, der aktuell erreichte Biegewinkel ermittelt werden. Mit den Soll-Werten der Biegeparameter, wird sich anhand des Modells ein spezifischer Verlauf der Materialdeformation zwischen Anlegelinie 9 bzw. Anlegekante 8 und dem Kontaktpunkt des Biegestempels einstellen. Dieser Deformationsverlauf wird auch einen spezifischen Längsversatz 18 hervorrufen. Bei Abweichung der Materialkenngrößen von den Soll-Werten, wird es insbesondere zu einer Abweichung des ermittelten Längsversatzes von dem erwarteten Längsversatz kommen. Somit kann die aktuell erreichte Biegegeometrie und insbesondere eine Abweichung vom erwarteten Wert ermittelt werden.

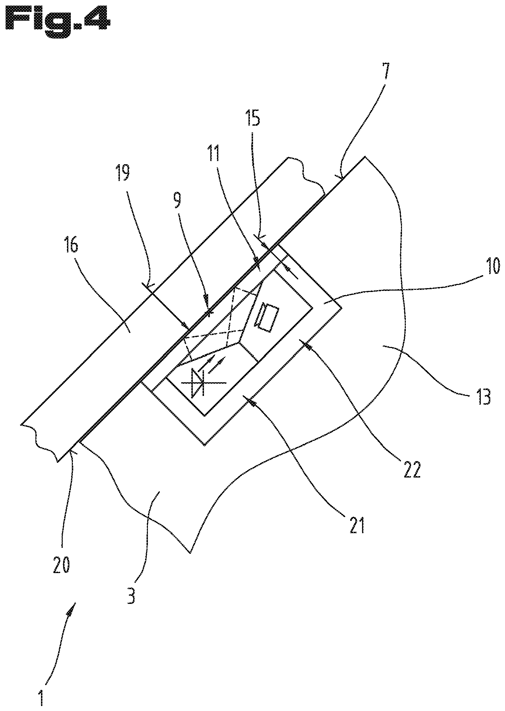

Fig. 4 zeigt eine Detaildarstellung des Sensors 10 zur Ermittlung eines Längsversatzes am Beispiel eines Biegewerkzeugs mit Schwenkbacken. Die beschriebenen Verhältnisse lassen sich direkt auf ein Unterwerkzeug zum Freibiegen umlegen. Der Sensor 10 ist im Werkzeugkörper 3 des Biegewerkzeugs 1 derart angeordnet, dass es während des Biegevorgangs zu keinem Versatz des Sensors 10 in Relation zur Anlegelinie 9 bzw. zur Anlegekante kommt. Das zu biegende Blech 16 liegt auf der Anlegefläche 7 auf, und wird vom niederfahrenden Biegestempel um die Anlegelinie 9 bzw. Anlegekante gegen die Anlegeflächen 7 gedrückt und somit gebogen.

Durch den Biegevorgang wird das Blech 16 in Richtung der Biegeausnehmung gedrückt, sodass sich ein virtueller Oberflächenpunkt 19 der Blechoberfläche relativ zum Sensor 10 bewegen wird.

Gemäß einer möglichen Ausführung ist der Sensor 10 durch eine Beleuchtungs-21 und Bilderfassungsvorrichtung 22 gebildet. Von der Beleuchtungsvorrichtung 21 wird dabei ein Abschnitt auf der Blechoberfläche 20 beleuchtet, welche beleuchtete Abschnitt von der Bilderfassungsvorrichtung 22 zyklisch erfasst wird. Aufgrund der stets vorhanden Oberflächenstruktur der Blechoberfläche 20 wird von der Bilderfassungsvorrichtung 22, während der Relativbewegung des Bleches 16 in Bezug zum Sensor 10, ein sich stetig änderndes Oberflächenmuster erfasst. Die erfassten Abbilder werden von einer nicht dargestellten Auswerteschaltung aufbereitet und analysiert, um aus aufeinanderfolgenden Abbildern des beleuchteten Oberflächenabschnittes einen Bewegungsvektor zu ermitteln. Aufgrund der Kenntnis der Bilderfassungsfrequenz und des ermittelten Bewegungsvektors lässt sich der reale Längsversatz ermitteln. Über diesen Längsversatz und Kenntnis der Geometrie des Biegewerkzeuges 1, insbesondere der Biegeausnehmung, kann der aktuelle Biegewinkel und die aktuell erreichte Schenkellänge ermittelt werden.

Eine derartige Ausführung eines Sensors 10 mit einer Beleuchtungs- 21 und Bilderfassungsvorrichtung 22 ist beispielsweise von optischen Computermäusen bekannt. Dort wird aus der Bewegung des Sensors in Relation zu einer Oberfläche, insbesondere einer Tischoberfläche, die Bewegung der Computermaus erfasst und in die Bewegung eines Zeigers am Bildschirm umgewandelt.

Zum Schutz des Sensors 10 gegenüber dem, an der Anlegefläche 7 bzw. Anlegelinie 9 vorbeibewegenden Bleches 16, kann vorgesehen sein, dass der Erfassungsabschnitt 11 des Sensors 10 um einen Versatz 15 gegenüber der Anlegefläche 7 distanziert angeordnet ist. Somit ist gewährleistet, dass das mit hohem Druck gegen die Anlegefläche 7 bzw. die Anlegekante gedrückte Blech 16, den Erfassungsabschnitt 11 bei der Relativbewegung nicht beschädigt.

Der Vorteil des gegenständlichen Unterwerkzeuges liegt nun insbesondere darin, dass im Wesentlichen jede Biegemaschine mit der Funktionalität einer Biegegeometrieüberwachung ausgestattet werden kann, ohne dass dafür konstruktive Änderungen an der Biegemaschine erforderlich sind. Ein bestehender Satz von Unterwerkzeugen kann um ein gegenständliches Unterwerkzeug erweitert werden und gestattet somit einen Überwachung des Biegeverlaufs und Einhaltung der gewünschten Biegegeometrie während der Durchführung der Biegeumformung. Auch kann die gegenständliche Funktionalität in einer Schwenkbiegemaschine verwendet werden, wobei die für das Unterwerkzeug beschriebenen Verhältnisse auf die Biegewange umgelegt werden.

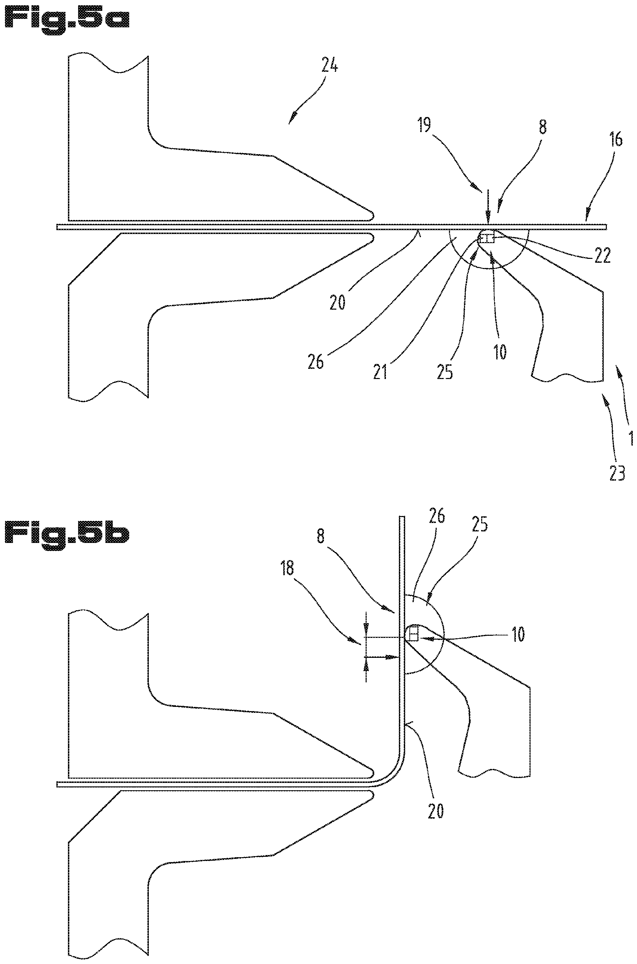

Fig. 5 zeigt eine Biegewerkzeuganordnung zur Verwendung beim Schwenkbiegen, wobei das Biegewerkzeug 1 als Biegewange 23 ausgebildet ist. Die Biegewerkzeuganordnung umfasst ferner noch ein Niederhalterwerkzeug 24, wobei das umzuformende Blech 16 zwischen dem oberen- und unteren Niederhalterwerkzeug geklemmt wird. In einem vorderen Ende 25 der Biegewange 23 ist der Sensor 10 angeordnet, wobei die Lichtabgaberichtung der Beleuchtungsvorrichtung 21 und der Erfassungsbereich der Bilderfassungsvorrichtung 22 in Richtung der Oberfläche 20 des umzuformenden Bleches 16 ausgerichtet ist.

Fig. 5a zeigt die Situation vor Beginn der Biegeumformung, bei der die Biegewange 23 mit bzw. entlang der Anlegekante 8 auf der Oberfläche 20 des Blechs 16 anliegt. Für diesen Kontaktpunkt werden die Koordinaten eines Oberflächenpunktes 19 in Bezug zur Biegewerkzeuganordnung bzw. in Bezug zur Biegemaschine ermittelt. Die weiteren Details der Bezugbildung des Oberflächenpunktes 19 wurden bereits zuvor beschrieben.

Fig. 5b zeigt die Situation nach Durchführung der Biegeumformung, bei der die Biegewange 23 von einem Antriebsmittel der Biegemaschine entlang einer Bahn bewegt wurde, und sich die Biegewange 23 nun in einer Endposition befindet. Durch die Verschwenkbewegung der Biegewange 23 hat sich auch der Oberflächenpunkt 19 um den Längsversatz 18 relativ zum vorderen Ende 25 der Biegewange 23 verschoben. Aus diesem Längsversatz 18 und der Kenntnis der Bewegungsbahn der Biegewange 23, kann über das mathematische Modell der Biegeumformung auf den Verlauf der Biegung zwischen dem vorderen Ende 25 der Biegewange und dem Niederhalterwerkzeug 24 geschlossen werden.

Im Vergleich zu einer Biegepresse bestehen bei einer Schwenkbiegemaschine mehr Möglichkeiten, die Bahnkurve der Biegewange 23 zu beeinflussen. Daher kann beim Erkennen eines vom Soll abweichenden Verlaufs des Längsversatzes 18, korrigierend eingegriffen und die Bahnkurve entsprechend adaptiert werden, um dennoch die gewünschte Biegegeometrie ausbilden zu können.

In Fig. 5 ist ferner eine weitere mögliche Ausführungsform dargestellt, bei der im Bereich des vorderen Endes 25 der Biegewange 23 ein Kontaktelement 26 angeordnet ist. Aufgrund des durchaus sehr komplexen Verlaufs der Bahnkurve, entlang der die Biegewange 23 verschwenkt wird, kann es vorkommen, dass die Anlegekante 8 nicht ortsfest in Bezug zur Biegewange 23 bleibt. Diese Situation ist auch in Fig. 5 erkennbar. Dieser Versatz kann aufgrund der Kenntnis der Geometrie der Biegewange 23 im Bereich der Anlegekante 8, berücksichtigt werden und wirkt sich somit auf die Bestimmung des Längsversatzes 18 nur gering aus. Unter Umständen besteht jedoch eine Genauigkeitsanforderung an die Biegegeometrie, die eine Berücksichtigung dieser Verschiebung der Anlegekante 8 erforderlich macht. Die Weiterbildung mit einem Kontaktelement 26 hat nun den Vorteil, dass eine Entkopplung der Krafteinleitung, vom Antriebsmittel der Biegemaschine in/auf das Blech, von der Erfassung des Längsversatzes 18 möglich wird.

Dieses Kontaktelement 26 ist beispielsweise als Tastscheibe ausgebildet und weist bevorzugt ferner eine Flachseite auf, welche am Blech 16 anliegt und somit der Verschwenkung des Bleches 16 in Relation zur Biegewange 23 folgt. Da das Kontaktelement 26 nicht kraftbeaufschlagt ist und somit keine Umformarbeit leisten muss, kann die verschwenkbare Lagerung sehr leichtgängig ausgeführt sein. Dadurch ist ein sehr gutes Anpassen an das sich aufbiegende Blech möglich und somit ein genaues Erfassen des Längsversatzes 18 gewährleistet.

Bevorzugt ist ferner, wenn der Sensor 10 in seiner Ausrichtung der Verschwenkbewegung des Kontaktelements 26 folgt, bspw. indem eine kraft- und/oder formschlüssige Verbindung zwischen dem Sensor und dem Kontaktelement besteht. Dadurch ist eine stets gleiche Ausrichtung des Sensors zum Blech gewährleistet und das Messergebnis für den Längsversatz kann nicht durch eine variierende Ausrichtung zwischen Sensor und Blech beeinträchtigt werden.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In den Fig. 2 und 5 sind weitere und gegebenenfalls für sich eigenständige Ausführungsformen des gegenständlichen Biegewerkzeugs gezeigt, wobei wiederum für gleiche Teile gleiche Bezugszeichen bzw. Bauteilbezeichnungen wie in der vorangegangenen Figur verwendet werden. Um unnötige Wiederholungen zu vermeiden, wird auf die detaillierte Beschreibung in der vorangegangenen Figur hingewiesen bzw. Bezug genommen.

Die Ausführungsbeispiele zeigen mögliche Ausführungsvarianten des Biegewerkzeugs, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind, sofern sie unter den Schutzumfang der Ansprüche fallen und diese Variationsmöglichkeit aufgrund der Lehre zum technischen Handeln durch gegenständliche Erfindung im Können des auf diesem technischen Gebiet tätigen Fachmannes liegt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren 1 bis 5 gezeigten Ausführungen den Gegenstand von eigenständigen, erfindungsgemäßen Lösungen bilden, sofern sie unter den Schutzumfang der Ansprüche fallen. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Biegewerkzeugs dieses bzw. dessen Bestandteile teilweise unmaßstäblich und/oder vergrößert und/oder verkleinert dargestellt wurden.

### Bezugszeichenaufstellung

- 1: Biegewerkzeug
- 2: Längsversatzmessvorrichtung
- 3: Werkzeugkörper
- 4: Längserstreckung
- 5: Biegeausnehmung
- 6: Flachseite
- 7: Anlegefläche
- 8: Anlegekante
- 9: Anlegelinie
- 10: Sensor
- 11: Erfassungsabschnitt
- 12: Auswerteschaltung
- 13: Schwenkbacken
- 14: Schwenkachse
- 15: Versatz
- 16: Blech, Blechteil
- 17: Krafteinwirkung
- 18: Längsversatz
- 19: Oberflächenpunkt
- 20: Blechoberfläche
- 21: Beleuchtungsvorrichtung
- 22: Bilderfassungsvorrichtung
- 23: Biegewange
- 24: Niederhalterwerkzeug
- 25: vorderes Ende
- 26: Kontaktelement

## Patentansprüche

1. Biegewerkzeug (1) mit einer Längsversatz-Messvorrichtung (2),
zur Verwendung in einer Biegemaschine als Teil einer Biegewerkzeuganordnung, in der ein zu biegendes Blech (16) angeordnet ist,
wobei das Biegewerkzeug (1) einen Werkzeugkörper (3) mit einer Längserstreckung (4) aufweist, welche Längserstreckung (4) parallel zu einer Biegelinie ausgerichtet ist, und
wobei parallel zu dieser Längserstreckung (4) und in Richtung des zu biegenden Bleches (16) ausgerichtet, zwei Anlegeflächen (7) oder zumindest eine Anlegekante (8) ausgebildet ist, **dadurch gekennzeichnet, dass**
im Bereich der Anlegekante (8) oder in einer Anlegefläche (7) ein Sensor (10) zur Ermittlung eines Längsversatzes (18) des Bleches (16) angeordnet ist, wobei ein Erfassungsabschnitt (11) des Sensors (10) in Richtung eines zu biegenden Bleches (16) ausgerichtet ist.

2. Biegewerkzeug nach Anspruch 1, **dadurch gekennzeichnet, dass** der Sensor (10) versatzfrei in Relation zur Anlegekante (8) oder zu einer Anlegelinie (9) angeordnet ist.

3. Biegewerkzeug nach einem der Ansprüche 1 oder 2, **dadurch gekennzeichnet, dass** der Sensor (10) um die Anlegelinie (9) verschwenkbar ausgebildet ist.

4. Biegewerkzeug nach einem der Ansprüche 1 bis 3, wobei das Biegewerkzeug als Unterwerkzeug einer Biegepresse ausgebildet ist, **dadurch gekennzeichnet, dass** die Anlegeflächen (7) durch Schwenkbacken (13) gebildet sind, welche Schwenkbacken (13) um eine, zur Anlegelinie (9) parallele Drehachse (14) verschwenkbar sind.

5. Biegewerkzeug nach einem der Ansprüche 1 bis 3, wobei das Biegewerkzeug als Unterwerkzeug einer Biegepresse ausgebildet ist, **dadurch gekennzeichnet, dass** die Anlegeflächen (7) eine Biegeausnehmung (5) eines V-förmigen Biegegesenks bilden, welche Biegeausnehmung sich von einer oberen Flachseite (6) des Werkzeugkörpers (3) und in Richtung weg vom umzuformenden Blech (16), in den Werkzeugkörper (3) erstreckt.

6. Biegewerkzeug nach einem der Ansprüche 1 bis 4, **dadurch gekennzeichnet, dass** der Sensor (10) durch eine Beleuchtungs- (21) und eine Bilderfassungsvorrichtung (22) gebildet ist.

7. Biegewerkzeug nach einem der Ansprüche 1 bis 4, **dadurch gekennzeichnet, dass** der Sensor (10) durch einen Sender und Empfänger für elektromagnetische Strahlung gebildet ist.

8. Biegewerkzeug nach einem der Ansprüche 4 bis 6, **dadurch gekennzeichnet, dass** der Sensor (10) in einer Ausnehmung zumindest einer der Anlegeflächen (7) angeordnet ist.

9. Biegewerkzeug nach einem der Ansprüche 4 bis 8, **dadurch gekennzeichnet, dass** eine Erfassungsflachseite des Sensors (10) um einen Versatz (15) von der Anlegefläche (7) distanziert, im Werkzeugkörper (3) angeordnet ist.

10. Biegewerkzeug nach einem der Ansprüche 1 bis 9, **dadurch gekennzeichnet, dass** das Biegewerkzeug eine Biegewange (23) einer Schwenkbiegemaschine ist.

11. Biegewerkzeug nach Anspruch 10, **dadurch gekennzeichnet, dass** der Sensor (10) in einem Abschnitt eines vorderen Endes (25) der Biegewange (23) angeordnet ist, welches vordere Ende (25) das Blech (16) während der Durchführung der Biegeumformung kontaktiert.

12. Biegewerkzeug nach Anspruch 11, **dadurch gekennzeichnet, dass** im Bereich des vorderen Endes (25) ein Kontaktelement (26) angeordnet ist, welches Kontaktelement (26) gegenüber der Biegewange (23) um die Anlegekante (8) verschwenkbar oder um eine zur Anlegekante (8) parallele Achse drehbar gehalten ist.

13. Biegewerkzeug nach Anspruch 12, **dadurch gekennzeichnet, dass** das Kontaktelement (26) eine Flachseite aufweist, in welcher der Sensor (10) angeordnet ist und welche Flachseite beim Biegevorgang am Blech (16) anliegt.

14. Biegewerkzeug nach Anspruch 12, **dadurch gekennzeichnet, dass** das Kontaktelement (26) als Tastscheibe ausgebildet ist, welche Tastscheibe bei der Biegeumformung am Blech (16) abrollt.

15. Biegewerkzeug nach einem der Ansprüche 1 bis 10, **dadurch gekennzeichnet, dass** der Sensor (10) als Einlegeteil ausgebildet ist.

16. Biegewerkzeug nach einem der Ansprüche 1 bis 11, **dadurch gekennzeichnet, dass** der Sensor (10) mit einer Auswerteschaltung (12) verbunden ist, welche ferner mit einer Maschinensteuerung verbunden ist oder in diese integriert ist.

17. Biegewerkzeug nach den Ansprüchen 5 und 12, **dadurch gekennzeichnet, dass** die Auswerteschaltung (12) ein Bildanalyse- und ein Vergleichsmodul aufweist.

18. Biegewerkzeug nach Anspruch 17, **dadurch gekennzeichnet, dass** das Bildanalyse- und Vergleichsmodul dazu ausgebildet ist, einen eindimensionalen oder zweidimensionalen Bewegungsvektor für den Längsversatz (18) zu ermitteln.

19. Biegewerkzeug nach einem der Ansprüche 1 bis 14, **dadurch gekennzeichnet, dass** der Sensor (10) durch eine Abrollvorrichtung gebildet ist.

20. Biegewerkzeuganordnung, wobei in der Biegewerkzeuganordnung ein zu biegendes Blech (16) angeordnet ist, **dadurch gekennzeichnet, dass** ein Biegewerkzeug (1) nach einem der Ansprüche 1 bis 19 Teil der Biegewerkzeuganordnung ist.

21. Verfahren zur Bestimmung der Biegegeometrie beim Freibiegen
ausgeführt auf einer Biegepresse mit einer Biegewerkzeuganordnung, welche Biegewerkzeuganordnung ein Unter- und ein Oberwerkzeug umfasst,
wobei das Unterwerkzeug ein Biegewerkzeug ist, das nach einem der Ansprüche 1-9 und 15-19 ausgebildet ist, und
wobei ein zu biegender Blechteil in die Biegewerkzeuganordnung eingelegt wird und die Freibiege-Umformung dadurch ausgeführt wird, dass durch ein Niederfahren des Oberwerkzeugs, der Blechteil vom Oberwerkzeug in eine Biegeausnehmung des Unterwerkzeugs gedrückt wird,
**dadurch gekennzeichnet,**
**dass** vor Beginn der Biegeumformung, eine Oberfläche des zu biegenden Blechteils mit einem Sensor zur Ermittlung eines Längsversatzes in Kontakt gebracht wird;
und **dass** für diesen Kontaktpunkt Referenz-Koordinaten der Blechoberfläche in Bezug zur Biegemaschine oder zur Biegewerkzeuganordnung ermittelt werden;
und **dass** während der Biegeumformung ein Längsversatz der Blechoberfläche in Bezug zum Sensor ermittelt wird;
und **dass** von einer Auswerteschaltung aus dem ermittelten Längsversatz, gemäß einem mathematischen Modell der Biegeumformung, die aktuelle Biegegeometrie ermittelt wird.

22. Verfahren zur Bestimmung der Biegegeometrie beim Schwenkbiegen ausgeführt auf einer Schwenkbiegemaschine mit einer Biegewerkzeuganordnung, welche Biegewerkzeuganordnung ein Niederhalterwerkzeug (24) und zumindest eine Biegewange (23) umfasst,
wobei ein zu biegender Blechteil in der Biegewerkzeuganordnung eingelegt wird und die Freibiege-Umformung dadurch ausgeführt wird, dass das Blechteil vom Niederhalterwerkzeug (24) geklemmt wird und die Biegewange (23) am Blechteil angelegt und um entlang einer Trajektorie bewegt bzw. verschwenkt wird,
und wobei die Biegewange (23) ein Biegewerkzeug ist, das nach einem der Ansprüche 1-3, 6-7 und 10-19 ausgebildet ist,
**dadurch gekennzeichnet,**
**dass** vor Beginn der Biegeumformung, eine Oberfläche des zu biegenden Blechteils mit einem Sensor zur Ermittlung eines Längsversatzes in Kontakt gebracht wird;
und **dass** für diesen Kontaktpunkt Referenz-Koordinaten der Blechoberfläche in Bezug zur Schwenkbiegemaschine oder zur Biegewerkzeuganordnung ermittelt werden;
und **dass** während der Biegeumformung ein Längsversatz der Blechoberfläche in Bezug zum Sensor ermittelt wird;
und **dass** von einer Auswerteschaltung aus dem ermittelten Längsversatz, gemäß einem mathematischen Modell der Biegeumformung, die aktuelle Biegegeometrie ermittelt wird.

23. Verfahren nach Anspruch 21, **dadurch gekennzeichnet, dass** während der Ermittlung des Längsversatzes, der Sensor ortsfest bezüglich der Referenz-Koordinaten gehalten wird.

24. Verfahren nach Anspruch 21 oder 23, **dadurch gekennzeichnet, dass** das Unterwerkzeug nach einem der Ansprüche 1 bis 9 ausgebildet ist und vom Sensor der Längsversatz des Bleches im Bezug zur Anlegekante des Unterwerkzeugs ermittelt wird.

25. Verfahren nach einem der Ansprüche 21 bis 24, **dadurch gekennzeichnet, dass** der Sensor mittels einer Verschwenkvorrichtung im Bereich des Oberwerkzeugs oder an einem Pressentisch der Biegepresse angeordnet ist, wobei während der Biegeumformung die Verschwenkvorrichtung dem sich aufbiegenden Blech folgt.

## Claims

1. A bending tool (1) having a longitudinal-offset measuring device (2),
for use in a bending machine as a part of a bending tool arrangement in which a sheet metal (16) to be bent is arranged,
wherein the bending tool (1) comprises a tool body (3) having a longitudinal extension (4), said longitudinal extension (4) being oriented in parallel to a bending line, and
wherein two contact surfaces (7) or at least one contact edge (8) are formed in parallel to this longitudinal extension (4) and oriented in the direction of the sheet metal (16) to be bent,
**characterized in that**
a sensor (10) for determining a longitudinal offset (18) of the sheet metal (16) is arranged in the region of the contact edge (8) or in a contact surface (7), wherein a sensing portion (11) of the sensor (10) is oriented in the direction of a sheet metal (16) to be bent.

2. The bending tool according to claim 1, **characterized in that** the sensor (10) is arranged without an offset in relation to the contact edge (8) or to a contact line (9).

3. The bending tool according to one of claims 1 or 2, **characterized in that** the sensor (10) is configured such that it can be pivoted about the contact line (9).

4. The bending tool according to one of claims 1 to 3, wherein the bending tool is formed as lower tool of a bending press, **characterized in that** the contact surfaces (7) are formed by pivoting jaws (13), said pivoting jaws (13) being pivotable about a rotation axis (14) which is parallel to the contact line (9).

5. The bending tool according to one of claims 1 to 3, wherein the bending tool is formed as lower tool of a bending press, **characterized in that** the contact surfaces (7) form a bending recess (5) of a V-shaped bending die, said bending recess extending from an upper flat side (6) of the tool body (3) and in the direction away from the sheet metal (16) to be formed into the tool body (3).

6. The bending tool according to one of claims 1 to 4, **characterized in that** the sensor (10) is formed by an illumination (21) and image capturing device (22).

7. The bending tool according to one of claims 1 to 4, **characterized in that** the sensor (10) is formed by a transmitter and a receiver for electromagnetic radiation.

8. The bending tool according to one of claims 4 to 6, **characterized in that** the sensor (10) is arranged in a recess of at least one of the contact surfaces (7).

9. The bending tool according to one of claims 4 to 8, **characterized in that** a sensing flat face of the sensor (10) is arranged in the tool body (3) spaced apart from the contact surface (7) by an offset (15).

10. The bending tool according to one of claims 1 to 9, **characterized in that** the bending tool is a bending beam (23) of a swivel bending machine.

11. The bending tool according to claim 10, **characterized in that** the sensor (10) is arranged in a section of a front end (25) of the bending beam (23), said front end (25) being in contact with the sheet metal (16) while the bend-forming is being carried out.

12. The bending tool according to claim 11, **characterized in that** a contact element (26) is arranged in the region of the front end (25), said contact element (26) being mounted so as to be pivotable relative to the bending beam (23) about the contact edge (8) or rotatable about an axis which is parallel to the contact edge (8).

13. The bending tool according to claim 12, **characterized in that** the contact element (26) has a flat side in which the sensor (10) is arranged and this flat side lies on the sheet metal (16) during the bending operation.

14. The bending tool according to claim 12, **characterized in that** the contact element (26) is provided as a sensor disk, said sensor disk rolling on the sheet metal (16) as the bend-forming is being carried out.

15. The bending tool according to one of claims 1 to 10, **characterized in that** the sensor (10) is provided in the form of an insert.

16. The bending tool according to one of claims 1 to 11, **characterized in that** the sensor (10) is connected to an evaluation circuit (12) which is in turn connected to a machine controller or is integrated therein.

17. The bending tool according to claims 5 and 12, **characterized in that** the evaluation circuit (12) comprises an image analysis and comparison module.

18. The bending tool according to claim 17, **characterized in that** the image analysis and comparison module is configured to determine a one-dimensional or two-dimensional motion vector for the longitudinal offset (18).

19. The bending tool according to one of claims 1 to 14, **characterized in that** the sensor (10) is provided in the form of a rolling device.

20. A bending tool arrangement, wherein a sheet metal (16) to be bent is arranged in the bending tool arrangement, **characterized in that** a bending tool (1) according to one of claims 1 to 19 is a part of the bending tool arrangement.

21. A method for determining the bending geometry during air bending, carried out on a bending press having a bending tool arrangement, said bending tool arrangement comprising a lower tool and an upper tool,
wherein the lower tool is a bending tool designed according to one of claims 1-9 and 15-19, and
wherein a sheet metal part to be bent is placed in the bending tool arrangement and the air bending operation is carried out such that - by moving down the upper tool - the sheet metal part is pressed into a bending recess of the lower tool by the upper tool, **characterized in that**
prior to the start of the bend-forming, a surface of the sheet metal part to be bent is brought in contact with a sensor for determining a longitudinal offset;
and that reference coordinates of the sheet metal surface for this contact point are determined by reference to the bending machine or bending tool arrangement;
and that during the bend-forming a longitudinal offset of the sheet metal surface relative to the sensor is determined;
and that the current bending geometry is determined by an evaluation circuit on the basis of the determined longitudinal offset according to a mathematical model of the bend-forming.

22. The method for determining the bending geometry during a swivel bending operation carried out on a swivel bending machine having a bending tool arrangement, said bending tool arrangement comprising a holding-down tool (24) and at least one bending beam (23),
wherein a sheet metal part to be bent is placed in the bending tool arrangement, and the air bending operation is carried out such that the sheet metal part is clamped by the holding-down tool (24) and the bending beam (23) is placed on the sheet metal part and moved along and/or pivoted about a trajectory,
and wherein the bending beam (23) is a bending tool designed according to one of claims 1-3, 6-7 and 10-19,
**characterized in that**
prior to the start of the bend-forming, a surface of the sheet metal part to be bent is brought in contact with a sensor for determining a longitudinal offset;
and that reference coordinates of the sheet metal surface for this contact point are determined by reference to the swivel bending machine or bending tool arrangement; and that during the bend-forming a longitudinal offset of the sheet metal surface relative to the sensor is determined;
and that the current bending geometry is determined by an evaluation circuit on the basis of the determined longitudinal offset according to a mathematical model of the bend-forming.

23. The method according to claim 21, **characterized in that** the sensor is held stationarily relative to the reference coordinates while the longitudinal offset is being determined.

24. The method according to claim 21 or 23, **characterized in that** the lower tool is designed according to one of claims 1 to 9 and the longitudinal offset of the sheet metal relative to the contact edge of the lower tool is determined by the sensor.

25. The method according to one of claims 21 to 24, **characterized in that** the sensor is mounted by means of a pivoting device in the region of the upper tool or on a press table of the bending press, wherein during the bend-forming the pivoting device follows the sheet metal as it is bent up.

## Revendications

1. Outil de pliage (1) avec un dispositif de mesure de décalage longitudinal (2),
destiné à être utilisé dans une machine de pliage en tant que partie d'une disposition d'outil de pliage, dans laquelle est disposée une tôle (16) à plier,
l'outil de pliage (1) comprenant un corps d'outil (3) avec une extension longitudinale (4), cette extension longitudinale (4) étant orientée parallèlement à une ligne de pliage et
parallèlement à cette extension longitudinale (4) et en direction de la tôle (16) à plier, sont formées deux surfaces d'appui (7) ou au moins une arête d'appui (8),
**caractérisé en ce que**
au niveau de l'arête d'appui (8) ou dans une surface d'appui (7), est disposé un capteur (10) pour la détermination d'un décalage longitudinal (18) de la tôle (16), une portion de détection (11) du capteur (10) étant orientée dans la direction d'une tôle (16) à plier.

2. Outil de pliage selon la revendication 1, **caractérisé en ce que** le capteur (10) est disposé sans décalage par rapport à l'arête d'appui (8) ou à une ligne d'appui (9).

3. Outil de pliage selon l'une des revendications 1 ou 2, **caractérisé en ce que** le capteur (10) est conçu de manière pivotante autour de la ligne d'appui (9).

4. Outil de pliage selon l'une des revendications 1 à 3, l'outil de pliage étant conçu comme un outil inférieur d'une presse de pliage, **caractérisé en ce que** les surfaces d'appui (7) sont constituées de mâchoires pivotantes (13), ces mâchoires pivotantes (13) étant pivotantes autour d'un axe de rotation (14) parallèle à la ligne d'appui (9).

5. Outil de pliage selon l'une des revendications 1 à 3, l'outil de pliage étant conçu comme un outil inférieur d'une presse de pliage, **caractérisé en ce que** les surfaces d'appui (7) forment un évidement de pliage (5) d'une matrice de pliage en forme de V, cette matrice de pliage s'étendant à partir d'un côté plat supérieur (6) du corps d'outil (3) et en s'éloignant de la tôle (16) à former, vers le corps d'outil (3).

6. Outil de pliage selon l'une des revendications 1 à 4, **caractérisé en ce que** le capteur (10) est constitué d'un dispositif d'éclairage (21) et d'un dispositif de capture d'images (22).

7. Outil de pliage selon l'une des revendications 1 à 4, **caractérisé en ce que** le capteur (10) est constitué d'un émetteur et d'un récepteur pour un rayonnement électromagnétique.

8. Outil de pliage selon l'une des revendications 4 à 6, **caractérisé en ce que** le capteur (10) est disposé dans un évidement d'au moins une des surfaces d'appui (7).

9. Outil de pliage selon l'une des revendications 4 à 8, **caractérisé en ce que** le côté plat de détection du capteur (10) est disposé dans le corps d'outil (3), distant d'un décalage (15) de la surface d'appui (7).

10. Outil de pliage selon l'une des revendications 1 à 9, **caractérisé en ce que** l'outil de pliage est une lame de pliage (23) d'une machine de pliage pivotante.

11. Outil de pliage selon la revendication 10, **caractérisé en ce que** le capteur (10) est disposé dans une portion d'une extrémité avant (25) de la lame de pliage (23), cette extrémité avant (25) entrant en contact avec la tôle (16) pendant la réalisation du pliage.

12. Outil de pliage selon la revendication 11, **caractérisé en ce que**, au niveau de l'extrémité avant (25), est disposé un élément de contact (26), cet élément de contact (26) pouvant être pivoté par rapport à la lame de pliage (23) autour de l'arête d'appui (8) ou étant maintenu de manière rotative autour d'un axe parallèle à l'arête d'appui (8).

13. Outil de pliage selon la revendication 12, **caractérisé en ce que** l'élément de contact (26) comprend un côté plat dans lequel le capteur (10) est disposé et ce côté plat s'appuyant, lors du processus de pliage, contre la tôle (16).

14. Outil de pliage selon la revendication 12, **caractérisé en ce que** l'élément de contact (26) est conçu comme un disque de palpage, ce disque de palpage roulant contre la tôle (16) lors du pliage.

15. Outil de pliage selon l'une des revendications 1 à 10, **caractérisé en ce que** le capteur (10) est conçu comme un insert.

16. Outil de pliage selon l'une des revendications 1 à 11, **caractérisé en ce que** le capteur (10) est relié avec un circuit d'analyse (12), qui est en outre relié à un contrôle de machine ou est intégré dans celle-ci.

17. Outil de pliage selon les revendications 5 et 12, **caractérisé en ce que** le circuit d'analyse (12) comprend un module d'analyse d'image et de comparaison.

18. Outil de pliage selon la revendication 17, **caractérisé en ce que** le module d'analyse d'image et de comparaison est conçu pour déterminer un vecteur de mouvement monodimensionnel ou bidimensionnel pour le décalage longitudinal (18).

19. Outil de pliage selon l'une des revendications 1 à 14, **caractérisé en ce que** le capteur (10) est constitué d'un dispositif de roulement.

20. Disposition d'outil de pliage, moyennant quoi, dans la disposition d'outil de plage, est disposé une tôle (16) à plier, **caractérisée en ce qu'**un outil de pliage (1) selon l'une des revendications 1 à 19 fait partie de la disposition d'outil de pliage.

21. Procédé de détermination de la géométrie de pliage lors du pliage libre, exécuté sur une presse plieuse avec une disposition d'outil de pliage, cette disposition d'outil de pliage comprenant un outil inférieur et un outil supérieur,
l'outil inférieur étant un outil de pliage qui est conçu selon l'une des revendications 1 à 9 et 15 à 19 et
une pièce en tôle à plier étant insérée dans la disposition d'outil de pliage et la déformation par pliage libre étant effectuée grâce au fait que, du fait d'un abaissement de l'outil supérieur, la pièce en tôle est comprimée par l'outil supérieur dans un évidement de pliage de l'outil inférieur,
**caractérisé en ce que**
avant le début de la déformation par pliage, une surface de la pièce en tôle à plier est mise en contact avec un capteur pour al détermination d'un décalage longitudinal ;
et **en ce que**, pour, ce point de contact, des coordonnées de référence de la surface de la tôle par rapport à la machine de pliage ou à la disposition d'outil de pliage sont déterminées ;
et **en ce que**, pendant la déformation par pliage, un décalage longitudinal de la surface de la tôle par rapport au capteur est déterminé ;
et **en ce que** la géométrie de pliage actuelle est déterminée par un circuit d'analyse à partir du décalage longitudinal déterminé, selon un modèle mathématique de la déformation par pliage.

22. Procédé de détermination de la géométrie de pliage lors du pliage pivotant, exécuté sur une machine de pliage pivotant, avec une disposition d'outil de pliage, cette disposition d'outil de pliage comprenant un outil à dispositif de retenue (24) et au moins une lame de pliage (23),
une pièce en tôle à plier étant insérée dans la disposition d'outil de pliage et la déformation par pliage libre étant effectuée grâce au fait que la pièce en tôle est serrée par l'outil à dispositif de retenue (24) et la lame de pliage (23) est appuyée contre la pièce en tôle et est déplacée ou pivotée le long d'une trajectoire,
et la lame de pliage (23) étant un outil de pliage qui est conçu selon l'une des revendications 1 à 3, 6 à 7 et 10 à 19,
**caractérisé en ce que**
avant le début de la déformation par pliage, une surface de la pièce en tôle à plier est mise en contact avec un capteur pour la détermination d'un décalage longitudinal ;
et **en ce que** pour ce point de contact des coordonnées de référence de la surface de la tôle par rapport à la machine de pliage pivotant ou à la disposition d'outil de pliage sont déterminées ;
et **en ce que**, pendant la déformation par pliage, un décalage longitudinal de la surface de la tôle par rapport au capteur est déterminé ;
et **en ce que** la géométrie de pliage actuelle est déterminée par un circuit d'analyse à partir du décalage longitudinal déterminé, selon un modèle mathématique de la déformation par pliage.

23. Procédé selon la revendication 21, **caractérisé en ce que**, pendant la détermination du décalage longitudinal, le capteur est maintenu de manière stationnaire par rapport aux coordonnées de référence.

24. Procédé selon la revendication 21 ou 23, **caractérisé en ce que** l'outil inférieur est conçu selon l'une des revendications 1 à 9 et le décalage longitudinal de la tôle par rapport à l'arête d'appui de l'outil inférieur est déterminé par le capteur.

25. Procédé selon l'une des revendications 21 à 24, **caractérisé en ce que** le capteur est disposé, au moyen d'un dispositif de pivotement, au niveau de l'outil supérieur ou sur une table de presse de la presse plieuse, moyennant quoi, pendant la déformation par pliage, le dispositif de pivotement suit la tôle qui se plie.
